# EUROPEAN PATENT SPECIFICATION

(11) **EP 4 402 636 B1**
(45) Date of publication and mention of the grant of the patent: **26.03.2025**
(21) Application number: 22772989.4
(22) Date of filing: 07.09.2022
(51) Int. Cl.: G06T 7/593

(54) **GENERATING COMPLETE DEPTH DATA FOR 6-DOF VIDEO**
ERZEUGUNG VOLLSTÄNDIGER TIEFENDATEN FÜR VIDEO MIT 6 FREIHEITSGRADEN (6DOF)
GÉNÉRATION DE DONNÉES DE PROFONDEUR COMPLÈTE POUR VIDÉO 6-DOF

(30) Priority: 16.09.2021 WO PCT/CN2021/118795; 18.10.2021 EP 21203090
(43) Date of publication of application: 24.07.2024
(73) Proprietor: Koninklijke Philips N.V., 5656 AG Eindhoven (NL)
(72) Inventor: CHEN, Hongxin, 5656 AG Eindhoven (NL); GU, Hai, 5656 AG Eindhoven (NL); MA, Fulong, 5656AG Eindhoven (NL)
(74) Representative: Philips Intellectual Property & Standards
(86) International application number: PCT/EP2022/074785
(87) International publication number: WO 2023/041385

(56) References cited:
- US-A1- 2017 094 259
- US-A1- 2018 343 442
- US-B1- 9 307 222

## Description

### FIELD OF THE INVENTION

The invention relates to the field of generating depth data of a scene. In particular, the invention relates to the field of generating depth data for a 6-DoF video of a scene.

### BACKGROUND OF THE INVENTION

Virtual reality (VR) video is an important application of VR technology which can bring an immersive experience of videos. Generally, VR video technology can be divided into 3-DoF (degree of freedom) and 6-DoF. 3-DoF technology only allows the user to freely rotate his head to watch in different orientations from a fixed location in the video scene. However, 6-DoF technology allows user to select different orientations and also allows user to freely select his positions in scene.

3-DoF video shooting only requires a minimal number of cameras facing different directions of the scene. Meanwhile, 6-DoF video shooting requires relatively large camera arrays.

In practice, for 6-DoF VR video shooting, there are a large number of cameras facing the scene, where every two neighboring cameras create a camera pair which are used to generate the depth images. The distance between a pair of cameras is called the baseline. The depth images and the images captured by the cameras can be used to render an image of a virtual view.

In a VR video shooting system, all the real-time images are transmitted to a workstation and the workstation runs a depth estimation algorithm to generate the depth images. Thus, a camera array with a large number of cameras requires a large amount of computation resources. For example, for a football match, more than 50 cameras might be needed, and thus one workstation may not be enough to compute all of the depth data for the football match. There is clearly a need to improve the computational efficiency for the generation of 6DoF video.

US 2017/094259 A1 discloses techniques related to 3D image capture with dynamic cameras.

### SUMMARY OF THE INVENTION

The invention is defined by the claims.

According to examples in accordance with an aspect of the invention, there is provided a method for generating depth data for a six degree of freedom, 6DoF, video of a scene according to claim 1.

Obtaining 6DoF video of a dynamic scene can be difficult as the depth of the objects in a dynamic scene may change at any time. Because of this, a large set of cameras has to be used such that, if an object gets close the cameras, depth data can still be obtained for the close object as, for example, it will still be in the field of view of at least two cameras.

However, using a large number of cameras also means obtaining (and possibly transmitting) a large amount of data. It is likely that most of the time during the 6DoF video, not all cameras in the large set are required to obtain depth data for the 6DoF video. This is particularly true if the objects are not close to the cameras.

Thus, the inventors propose analyzing a first set of depth components in a frame of the 6DoF video and, based on the analysis determining the first set of depth components is complete, generating a second set of depth components with a smaller number of depth components than the first set. Methods of analysis will be discussed below.

The completeness of the depth components refers to how much of the scene is captured in the depth components. If all of the depth infromation of the scene is captured in the depth components, a 6DoF frame can be accurately rendered because there is enough depth information of the scene to enable accurate warping of the images.

Determining the first set of depth components to be complete may be defined by the first set of depth components having enough depth information of the scene to render a frame of the 6DoF without any missing depth information of the scene in the frame. Similarly, determining the first set of depth components to be overcomplete is defined by the first set of components having more than enough depth information of the scene. In other words, an overcomplete first set of depth components has redundant or duplicated depth information.

Assessing completeness may be performed by assessing continuity of the depth components, identifying gaps or occlusion in the depth components, identifying missing depth information, identifying artefacts etc.

The first set of images and the first set of depth components may be used to render a first frame of the 6DoF video. The second set of images and the second set of depth components may be used to render a second frame of the 6DoF video, wherein the second frame is subsequent to the first frame.

The images are obtained from a group of cameras. A group of cameras is selected by selecting a subset of cameras from all the available cameras imaging the scene. A group of cameras may comprise one or more pairs of cameras thereby to enable the generation of depth components from the images obtained by both cameras in a camera pair. A camera pair may be formed by selecting a camera and the closest available camera in the group of camera pairs.

A depth component may comprise a depth map (e.g. generated from a pair of images) or any other type of depth information for the scene (e.g. 3D mesh, point cloud etc.). In other words, a depth component could be any form of depth information of the scene comprising a plurality of depth values.

For example, in a depth map, each depth value may correspond to a pixel of the depth map. In a 3D mesh, each depth value may correspond to a vertex, edge and/or face of the 3D mesh. In a point cloud, each depth value may correspond to a point in the point cloud.

It is not necessary for a camera pair to be comprised of two neighboring cameras. In fact, it may be preferable to have camera pairs comprising of two cameras far from each other as, the larger the baseline (i.e. distance between the cameras) of two cameras is, the higher the accuracy of the depth image is. Thus with a fixed number of selected cameras, the accumulation (i.e. sum) of the baselines of the selected cameras may be maximized when meeting the requirement that each pixel can be seen at least 2 cameras.

For example, the selected cameras from left to right may be numbered as 1,2,3,4. If the camera pairs are 1-3, 2-4 and 2-3, then the accumulation of the baselines is larger than that of the camera pairs 1-2, 2-3 and 3-4 and thus the accuracy of the depth components may be greater.

Analyzing the first set of depth components may comprise determining an indication of how close one or more of the objects in the scene are to a first group of cameras used to obtain the first set of images.

The inventors propose determining an indication of proximity (or indication of closeness) for the objects in the scene. The indication indicates how close one or more of the objects are to the cameras which are currently imaging the scene (i.e. the first group). If the object is closer to the cameras than the distance for which the current first group of cameras can obtain depth data, a second group of camera pairs is selected to obtain the next frame of the 6DoF video, where the second group of cameras is capable of obtaining depth data for the closest object to the cameras.

The indication is an estimate of how physically close an object is to the first group of cameras. The indication may comprise, for example, a single value of depth or a single non-numerical indication (i.e. close, far etc.). Alternatively, the indication may comprise information on depth of the closest object and information on where the closest object is in the scene.

The indication may also comprise information on the depth of one or more of the objects and, in some embodiments, of the positions of one or more of the objects.

A depth component may comprise a depth map generated by performing depth estimation on at least two images.

A depth component may comprise a depth map/depth image, wherein each depth map is generated from images obtained from a camera pair. A depth map may be obtained by performing depth estimation (e.g. via depth disparity) on two texture images obtained from the camera pair (i.e. an image from each camera in a camera pair).

In an embodiment, the indicator of proximity may be based on the pixel of a depth map with the lowest depth value.

In the context of the invention, the terms depth map and depth image are equivalent and interchangeable.

The method may further comprise determining whether a camera-facing surface of any one of the objects in the scene is not visible in the field of view of at least two cameras in the first group of camera, wherein generating a second group of depth components is further based on the determination.

A camera-facing surface of an object may be a surface of the object which is imaged by at least one camera in a camera group (i.e. visible in the field of view (FOV) of at least one camera). Ensuring all camera-facing surfaces of the objects are imaged by at least two cameras (i.e. within the FOV of at least two cameras) will enable the depth components to be generated with more accuracy.

For example, if it is determined that one or more camera-facing surfaces are not visible in the depth components, the second group of cameras may be selected to comprise all of the cameras available to image the scene. Alternatively, one or more cameras can be identified which can image the camera-facing surfaces not currently visible in the FOV of at least two cameras.

Analyzing the first set of depth components may further comprise determining whether any object in the scene is at least partly occluded in the first set of depth components.

Analyzing the first set of depth components to determine object occlusion may comprise identifying where the occlusion is and which cameras could be used to obtain subsequent images for the next (second) frame to avoid the occlusion in the generated subsequent depth components.

For example, if object occlusion is determined in the depth components, the second group of cameras may be selected to comprise all of the cameras available. Alternatively, one or more cameras can be identified to remedy the occlusion, wherein the identified cameras are included in the second group.

Analyzing the first set of depth components may further comprise determining whether the first set of depth components has any visual artifacts and/or depth artifacts.

Visual artifacts and depth artifacts may occur due to a lack of cameras imaging a particular part of the scene, object in the scene or part of an object. Artifacts may also occur due to faulty cameras (i.e. a camera not imaging the scene as intended due to, for example, the lens being foggy or the sensor in the camera malfunctioning), thus, different or additional cameras may be needed in the second group.

Analyzing the depth components to determine whether they have any visual artifacts and/or depth artifacts may further comprise identifying where the artifact is in the depth components and which cameras could be used to obtain subsequent second set of images for the next (second) frame to remedy the artifact(s) in the subsequent depth components.

Depth estimation usually uses a feature match algorithm between two camera images. If the feature match algorithm fails to match a pixel in the first image with a pixel in the second image, the algorithm outputs a large matching error. Thus, artefacts may be identified using the matching errors output by the feature match algorithm during depth estimation. Additionally, the region(s) of the depth map with the artefact(s) may be identified by checking which pixels in the two images have a large matching error.

The method may further comprise selecting a group of cameras configured to obtain the second set of images based on the analysis of the first set of depth components.

The inventors propose analyzing the first set of depth components and, based on the analysis, selecting which cameras to use to obtain a second set of images. The second set of images may have a lower number of images than the first set. The second set of images is used to generate the second set of depth components.

The group of cameras can be selected in order to reduce the number of images in the second set of images and thus also reduce the number of depth components in the second set of depth components.

Selecting the group of cameras may comprise selecting camera pairs such that every object in the scene visible to at least one camera is included in the field of view of at least two cameras in the group of cameras. The cameras may be selected such that depth can be estimated for every (visible) part of every object.

Selecting a group of cameras may comprise selecting a pre-defined group of cameras from a set of pre-defined groups of cameras, wherein each pre-defined group of cameras is associated with a minimum distance from the pre-defined group of cameras at which an object in the scene is guaranteed to be within the field of view of at least two cameras in the pre-defined group of cameras.

From the knowledge of the distance(s) between cameras and the field of view(s) of the cameras in a pre-defined group of cameras, it is possible to derive the closest/minimum distance an object can be to a pre-defined group before the pre-defined group cannot properly obtain depth information for the object. In other words, a minimum distance can be derived for each pre-defined group of cameras based on the distance between the cameras and the field of views of the cameras in the pre-defined group.

Thus, each pre-defined group of cameras corresponds to a minimum distance (from the pre-defined group) at which an object is guaranteed to be within the field of view of two cameras (in the pre-defined group) such that depth information can be obtained for the object.

If the analysis determines the first set of depth components to be undercomplete, the second set of depth components has a larger number of depth components than the first set of depth components.

Determining the first set of depth components to be undercomplete is defined by the first set of depth components not having enough depth information of the scene to render a frame of the 6DoF. In other words, an undercomplete first set of depth components has missing depth information of the scene in the frame.

Determining the first set of depth components to be overcomplete may be based on the indication of closeness indicating that the closest object in the scene is further from the first group of cameras than a minimum distance at which an object in the scene is guaranteed to be within the field of view of at least two cameras in a second group of cameras, wherein the second group of cameras comprises less cameras than the first group of cameras.

Determining the first set of depth components to be undercomplete may be based on the indication of closeness indicating that the closest object in the scene is closer to the first group of cameras than a minimum distance at which an object in the scene is guaranteed to be within the field of view of at least two cameras in the first group of cameras.

The invention also provides a computer program product according to claim 9.

The invention also provides a system for generating depth data for a six degree of freedom, 6DoF, video of a scene according to claim 10.

The processor may be configured to analyze the first set of depth components by determining an indication of how close one or more of the objects in the scene are to the first group of cameras.

The processor may be further configured to determine whether a camera-facing surface of any one of the objects in the scene is not visible in the field of view of at least two cameras in the first group of camera and wherein the processor is further configured to generate a second group of depth components based on the determination.

The processor may be further configured to select a group of cameras configured to obtain the second set of images based on the analysis of the first set of depth components.

The processor may be configured to select a group of cameras by selecting a pre-defined group of cameras from a set of pre-defined groups of cameras, wherein each pre-defined group of cameras is associated with a minimum distance from the pre-defined group of cameras at which an object in the scene is guaranteed to be within the field of view of at least two cameras in the pre-defined group of cameras.

The system may further comprise a group of cameras comprising a plurality of cameras.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows an array of cameras;
Fig. 2 shows an array of cameras with six camera pairs;
Fig. 3 shows an array of cameras with four camera pairs;
Fig. 4 shows an array of cameras with three camera pairs;
Figs. 5A and 5B show an array of cameras imaging two objects with two and three camera pairs respectively; and
Fig. 6 shows a flow chart according to an embodiment of the current invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for generating depth data for a six degree of freedom, 6DoF, video of a scene. The method comprises obtaining a first set of images of the scene, generating a first set of depth components based on the first set of images and analyzing the first set of depth components to determine completeness of the depth components. A second set of images of the scene are further obtained and a second set of depth components are generated based on the second set of images, wherein, if the analysis determines the first set of depth components to be overcomplete, the number of depth components in the second set is selected to be smaller than the number of depth components in the first set.

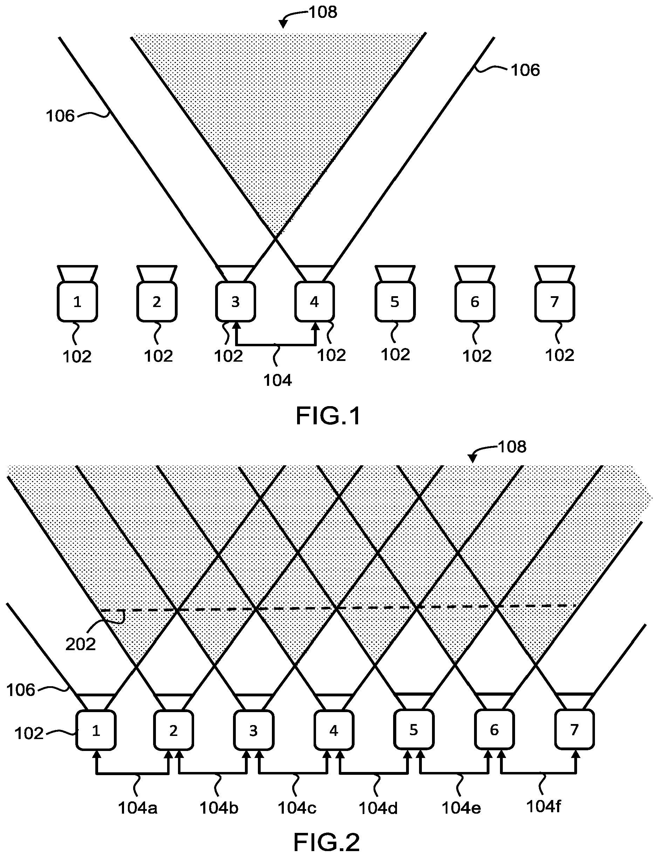

Fig. 1 shows an array of cameras 102. Each camera 102 has a corresponding field of view 106. The fields of view 106 are only shown for a camera pair 104 made of cameras 102 three and four. The shaded area 108 shows the area of a scene for which depth data can be obtained based on images obtained by the camera pair 104.

In general, the number of camera pairs 104 used to obtain depth data of a scene does not only depend on the size of the space where you want to shoot the video, but also depends on how close all of the objects in the scene are to the camera pairs 104. If the objects are very close to the camera pairs 104, some cameras 102 may have to be moved closer to other cameras 102 in order to properly estimate the depth data. In other words, the baseline of the camera pairs 104 should be short when the objects are close. However, if the objects are far from the camera pairs 104, then the baseline could be longer. All else being equal, longer baselines may be preferred, as a longer baseline may be associated with greater accuracy in depth estimation, when using feature-matching / disparity.

In a dynamic scene (e.g. a football match) the background is usually very far from the array of cameras 102. However, the players may be moving such that they are sometimes close to the array of cameras 102 and sometimes they are far from them. Thus, it is not necessary to always have all of the cameras 102 close to each other. However, during VR shooting, all the cameras 102 are fixed and, when considering the worst case, enough cameras 102 should be used and they should be close enough to each other to obtain depth data for objects which are close.

Once the cameras 102 are set up, the number of cameras 102 and their relative positions are fixed. However, it has been realized that, in a dynamic scene, it is not necessary to use all the images obtained with the cameras 102 to estimate the depth data at all times. Thus an algorithm could select a sub-set of the obtained images which could then be used to estimate the depth data according to the detected scene. This could save computational power and improve the computational efficiency.

In summary, the invention according to the claims proposes a method to dynamically select the necessary images from an array of cameras 102 to estimate the depth data of a scene and thus reduce the required computational power.

The array of cameras 102 may be part of a 6-DoF VR video shooting system which further includes a workstation and cables for transmitting all the images from the cameras 102 to the workstation. The workstation may comprise a processor which is configured to generate the depth data for each camera pair 104 for a first frame. The workstation may then select the necessary images from particular camera pairs 104 which are needed further estimate the depth data for the following frames. Selecting the necessary images is based on analyzing the depth data for the previous frame.

Analyzing the depth data (e.g. via an algorithm) for the previous frame may comprise detecting and removing the redundant camera pairs 104 according to the previous estimated depth data. Optionally, more camera pairs 104 may be added if the analysis detects that the currently selected camera pairs 104 are not sufficient to estimate the depth data. The depth data may be depth images or depth maps.

The selection of camera pairs 104 may be based on the previous depth data. The selection of camera pairs 104 could be further based on the detection of occlusion of an object in the scene. Additionally, the selection of camera pairs 104 may be based on checking the failure of depth estimation at particular areas of the scene. If there is a failure to estimate depth and/or occlusion at a particular area when estimating the depth data based on the images from a particular camera pair 104, then there may be a need for more (or different) camera pairs 104 which are able to obtain depth data for the particular area. Methods of analyzing the depth data will be further detailed below.

The selection of camera pairs 104 defines which images (i.e. from which camera pairs 104) are used for depth estimation. Thus, the analysis of depth estimation may be used to choose which images are used for depth estimation for a second frame based on the depth data of a first frame. In this case, all images may be obtained from all of the cameras 102 for the second frame but only a particular sub-set of images is chosen based on the selected camera pairs 104. In general, the depth data for a frame is used to choose which images are used for depth estimation in the subsequent frame.

Fig. 2 shows an array of cameras 102 with six camera pairs 104(a-f). In order to estimate depth of an object, the object should be within the field of view 106 of at least two cameras 102 in a camera pair 104. The depth of a pixel can be estimated by disparity calculation between the two images captured by a camera pair 104.

The shaded area 108 defines the area for which depth can be correctly estimated based on the six camera pairs 104a-f. The dotted line 202 defines how close an object can be to the six camera pairs 104a-f before the estimated depth data is no longer complete. By using the six camera pairs 104a-f, an object can be relatively close to the camera array whilst ensuring that each part of the object can be seen at least one camera pair 104.

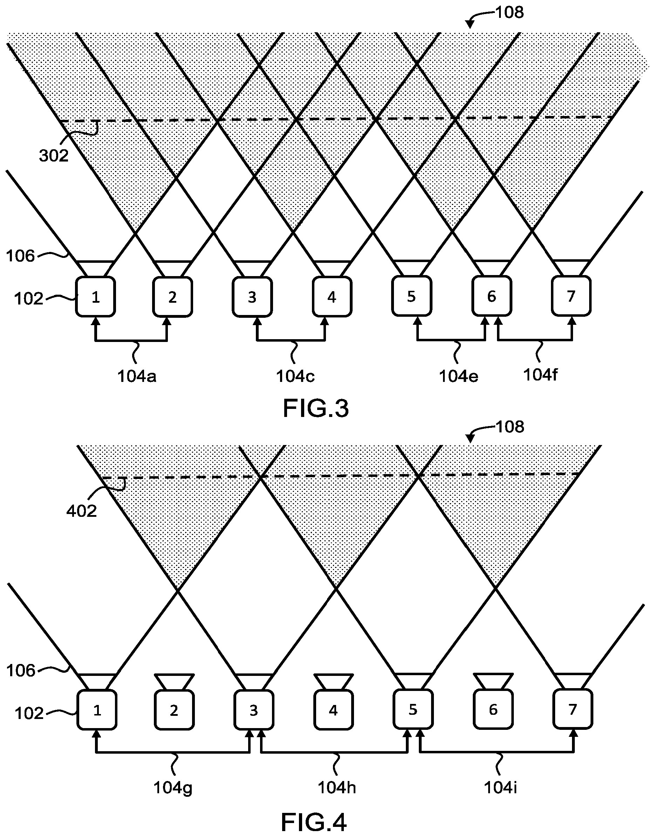

Fig. 3 shows an array of cameras 102 with four camera pairs 104a, 104c, 104e and 104f. Similarly to Figs. 1 and 2, the shaded area 108 defines the area of the scene for which depth can be correctly estimated based on the given camera pairs 104a, 104c, 104e and 104f. The line 302 defines how close an object can be to the four camera pairs 104a, 104c, 104e and 104f before the estimated depth data is no longer complete.

By only using four camera pairs 104a, 104c, 104e and 104f, an object can no longer be as close to the array of cameras as when six camera pairs 104a-f are used (see Fig. 2), but depth data only needs to be estimated for four camera pairs 104a, 104c, 104e and 104f, instead of for six camera pairs 104a-f.

Fig. 4 shows an array of cameras 102 with three camera pairs 104g, 104h and 104i. Similarly to Figs. 1, 2 and 3, the shaded area 108 defines the area of the scene for which depth can be correctly estimated based on the given camera pairs 104g, 104h and 104i. The line 402 defines how close an object can be to the three camera pairs 104g, 104h and 104i before the estimated depth data is no longer complete.

By only using three camera pairs 104g, 104h and 104i, an object can no longer be as close to the array of cameras as when four or six camera pairs 104 are used (see Figs. 2 and 3), but depth data only needs to be estimated for three camera pairs 104g, 104h and 104i instead of for four or six camera pairs 104.

Thus, based on Figs. 2, 3 and 4, there is a clear relationship between the number of camera pairs 104 for which depth data is obtained and how close an object can be to the array of cameras 102. For example, it is clear that when an object moves further from the array of cameras 102, the necessary computational resources to estimate the depth data are reduced. If depth data in a dynamic scene is always estimated for the six camera pairs 104a-f shown in Fig. 2, this would likely be a waste of computational resources as it is unlikely that there will always be an object that close to the array of cameras 102.

In practice, the distance of objects to array of cameras 102 is known (e.g. based on depth data from a previous frame), thus there is a need for a way of finding which camera pairs 104 to select (i.e. which images to use for depth estimation for the next frame).

At the beginning of the 6-DoF video, the system may have no idea of the scene it will see. Thus, it may be advantageous to use a large number of camera pairs 104 to estimate the depth data for the first frame (e.g. use every two neighboring cameras for the first frame, as shown in Fig. 2). After that, the depth data for the first frame can be used to select a minimum number of camera pairs 104 which ensures that each part of the scene can be seen at least one camera pair 104.

Additionally, the larger the baseline of a camera pair 104 (i.e. distance between the two cameras) is, the more accurate the depth data is. Thus, the accumulation (i.e. sum) of all the baselines for all the camera pairs 104 used may be maximized when selecting the camera pairs 104. Any kind of optimization method (or even a brute force method) may be used to select the cameras to meet the two conditions (i.e. each part of the scene imaged by at least one camera pair 104 and the sum of baselines maximized). After the camera pairs 104 are selected, the selected camera pairs 104 can be used to estimate the depth data for the next frame. This method can be continuously used for each of the following frames. This method is applicable when some objects are moving away from the cameras 102.

Once the camera pairs 104 are selected and used for depth data estimation, if some objects are moving toward some cameras, more camera pairs 104 may need to be selected for the next frame. Optionally, the depth data for all selected camera pairs 104 may be stitched. Stitching the depth data from multiple camera pairs 104 involves all of the depth data being joined together (i.e. stitched) into a singular component (e.g. a depth image). Stitching algorithms will be known, for example, for stitching depth images and/or depth maps. In some cases, all the depth data may not be able to be stitched as, for example, one depth image by a stitching algorithm.

If an error is detected during the stitching of depth data, one or more camera pairs may be added which correspond to the depth gap. Alternatively, all the camera pairs 104 (e.g. Fig. 2) can be used to estimate depth data for a second frame and then use the estimated depth data for the second frame to re-select the camera pairs 104 for a third frame. Selecting the camera pairs 104 may be based on the depth data obtained by the camera pairs 104 and/or a stitched depth component generated from the depth data.

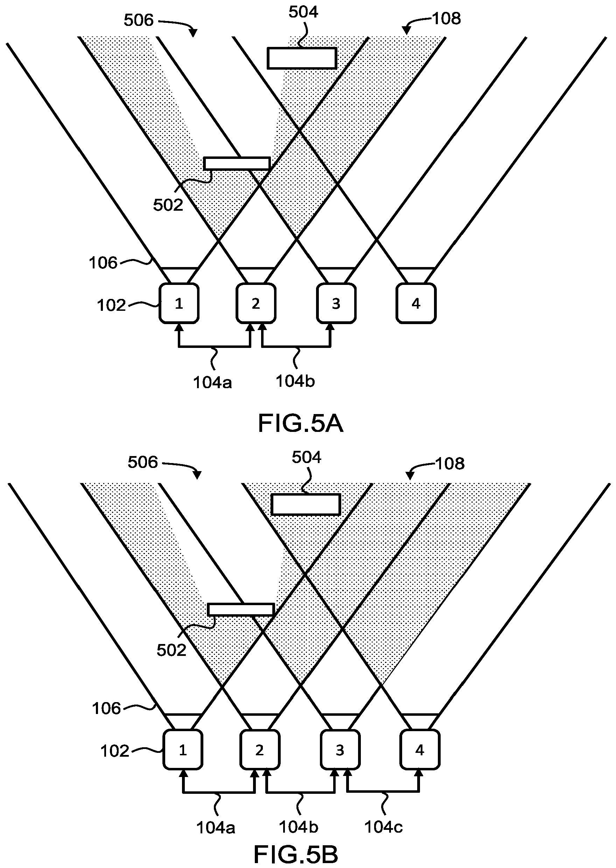

Figs. 5A and 5B show an array of cameras 102 imaging two objects 502 and 504 with two and three camera pairs 104 respectively. The array of cameras 102 for Figs. 5A and 5B only contains four cameras 102 for simplicity. In Fig. 5A, the object 502 is partly occluding the object 504 for the selected camera pairs 104a and 104b. The area 506 shows the area of the scene which is occluded due to the object 502. A part of object 504 is thus occluded by the object 502 for both camera pairs 104a and 104b. If object 502 was not in the scene, the depth data for all of object 504 could be estimated by both of camera pairs 104a and 104b. However, due to the occlusion caused by object 502, the depth data can no longer be estimated for all of object 504 using these camera pairs.

In Fig. 5B, the camera pair 104c is also selected. Object 502 does not occlude object 504 for the camera pair 104c and thus depth data can be obtained by camera pair 104c. Thus, object occlusion may also need to be considered when selecting camera pairs 104.

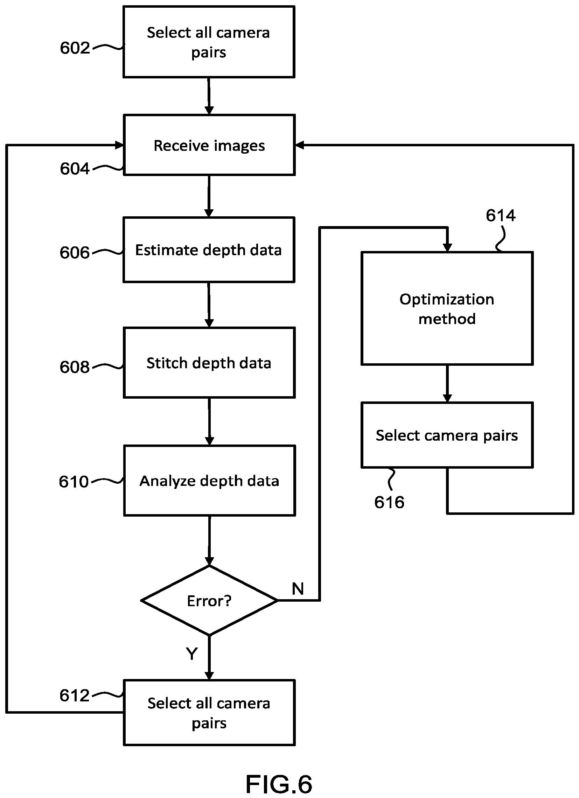

Fig. 6 shows a flow chart according to an embodiment of the current invention. At the start of the 6-DoF video (i.e. for a first frame of the video), all camera pairs may be used, step 602. The images from all the cameras pairs are received, step 604, and used to estimate depth data (e.g. depth images/depth maps) for the scene, step 606. The images from every two neighboring cameras may be used to generate depth data as shown in Fig. 2. The depth data for each selected camera pair may be stitched, step 608, with a stitching algorithm.

The stitched depth data may be analyzed, step 610, to determine if there are any "errors". Alternatively, the depth data (before stitching 608) may be analyzed 610. If the analysis 610 identifies one or more errors, it may mean the selected camera pairs are not sufficient to obtain a complete set of depth data for then scene. In other words, the depth data may be undercomplete. An error may comprise an object not being imaged by at least two cameras in the camera array, an object being occluded or the depth data not being complete for a camera pair (e.g. lens of a camera being dirty/broken). If an error occurs, then all the camera pairs may be re-selected, step 612 and used for the next frame.

If there are no errors detected in the stitched depth data, this may mean the depth data obtained for the scene in the current frame is overcomplete (i.e. more depth data than needed for the scene/some of the depth data is redundant or duplicated). If this is the case, an optimization method 614 may be used to select the camera pairs which meet three conditions: the amount of selected cameras is minimum, the part of the scene in the real world corresponding to each pixel in the depth data is physically seen by at least two cameras (occlusion considered) and the accumulation of the baselines of the selected camera pairs is maximum. The optimization method 614 is used to select camera pairs, step 616, for the next frame. For each frame, the output may be the stitched depth image.

Clearly, the selection of camera pairs above is used to obtain image pairs for depth estimation. However, the selection of camera pairs may involve selecting which cameras obtain images of the scene or selecting the images of which cameras to use for depth estimation. More than two cameras may be selected for depth estimation (e.g. three cameras may be selected for more accurate depth data instead of a camera pair).

The skilled person would be readily capable of developing a processor for carrying out any herein described method. Thus, each step of a flow chart may represent a different action performed by a processor, and may be performed by a respective module of the processor.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer-implemented method for generating depth data for a six degree of freedom, 6DoF, video of a scene, the method comprising:
obtaining (604) a first set of images of the scene;
generating (606) a first set of depth components based on the first set of images, wherein each depth component comprises a plurality of depth values;
analyzing (610) the first set of depth components to determine completeness of the depth components;
obtaining (604) a second set of images of the scene, wherein each set of images are obtained from a group of cameras among all the available cameras imaging the scene, which are fixed; and
generating (606) a second set of depth components based on the second set of images, wherein:
if the analysis (610) determines the first set of depth components to be overcomplete, the number of depth components in the second set is selected to be smaller than the number of depth components in the first set, wherein the overcomplete first set of depth components has more than enough depth information of the scene to render a 6DoF frame, and
if the analysis determines the first set of depth components to be undercomplete, the number of depth components in the second set is selected to be larger than the number of depth components in the first set, wherein a portion of the depth information of the scene is missing from the undercomplete first set of depth components to render a frame of the 6DoF scene.

2. The method of claim 1, wherein the first set of images are obtained with a first group of cameras and wherein analyzing (610) the first set of depth components comprises determining an indication of how close one or more of the objects in the scene are to the first group of cameras.

3. The method of any one of claims 1 or 2, wherein a depth component comprises a depth map generated by performing depth estimation on at least two images.

4. The method of any one of claims 1 to 3, further comprising determining whether a camera-facing surface of any one of the objects in the scene is not visible in the field of view (106) of at least two cameras (102) corresponding to the first set of images, wherein generating (606) a second set of depth components is further based on the determination.

5. The method of any one of claims 1 to 4, wherein analyzing (610) the first set of depth components further comprises determining whether any object in the scene is at least partly occluded in the first set of depth components.

6. The method of any one of claims 1 to 5, wherein analyzing (610) the first set of depth components further comprises determining whether the first set of depth components has any visual artifacts and/or depth artifacts.

7. The method of any one of claims 1 to 6, wherein the first set of images are obtained with a first group of cameras and wherein the method further comprises selecting (616) a second group of cameras configured to obtain the second set of images based on the analysis (610) of the first set of depth components.

8. The method of claim 7, wherein selecting (616) a group of cameras comprises selecting a pre-defined group of cameras from a set of pre-defined groups of cameras, wherein each pre-defined group of cameras is associated with a minimum distance from the pre-defined group of cameras at which an object in the scene is guaranteed to be within the field of view (106) of at least two cameras (102) in the pre-defined group of cameras.

9. A computer program product comprising computer program code which, when executed on a computing system having a processing system, cause the processing system to perform all of the steps of the method according to any of claims 1 to 8.

10. A system for generating depth data for a six degree of freedom, 6DoF, video of a scene, the system comprising a processor configured to:
obtain (604) a first set of images of the scene;
generate (606) a first set of depth components based on the first set of images, wherein each depth component comprises a plurality of depth values;
analyze (610) the first set of depth components to determine completeness of the depth components;
obtain (604) a second set of images of the scene, wherein each set of images are obtained from a group of cameras among all the available cameras imaging the scene, which are fixed; and
generate (606) a second set of depth components based on the second set of images, wherein:
if the analysis (610) determines the first set of depth components to be overcomplete, the number of depth components in the second set is selected to be smaller than the number of depth components in the first set, wherein the overcomplete first set of depth components has more than enough depth information of the scene to render a 6DoF frame, and
if the analysis determines the first set of depth components to be undercomplete, the number of depth components in the second set is selected to be larger than the number of depth components in the first set, wherein a portion of the depth information of the scene is missing from the undercomplete first set of depth components to render a frame of the 6DoF scene.

11. The system of claim 10, wherein the first set of images are obtained with a first group of cameras and wherein the processor is configured to analyze (610) the first set of depth components by determining an indication of how close one or more of the objects in the scene are to the first group of cameras.

12. The system of any one of claims 10 or 11, wherein the processor is further configured to determine whether a camera-facing surface of any one of the objects in the scene is not visible in the field of view (106) of at least two cameras (102) corresponding to the first set of images and wherein the processor is further configured to generate (606) a second set of depth components based on the determination.

13. The system of any one of claims 10 to 12, wherein the first set of images are obtained with a first group of cameras and wherein the processor is further configured to select (614) a group of cameras configured to obtain the second set of images based on the analysis of the first set of depth components.

14. The system of claim 13, wherein the processor is configured to select (614) a group of cameras by selecting a pre-defined group of cameras from a set of pre-defined groups of cameras, wherein each pre-defined group of cameras is associated with a minimum distance from the pre-defined group of cameras at which an object in the scene is guaranteed to be within the field of view (106) of at least two cameras (102) in the pre-defined group of cameras.

## Patentansprüche

1. Computer-implementiertes Verfahren zum Erzeugen von Tiefendaten für ein Video mit sechs Freiheitsgraden, 6DoF, Video einer Szene, wobei das Verfahren Folgendes umfasst:
Erhalten (604) eines ersten Satzes von Bildern der Szene;
Erzeugen (606) eines ersten Satzes von Tiefenkomponenten basierend auf dem ersten Satz von Bildern, wobei jede Tiefenkomponente eine Vielzahl von Tiefenwerten umfasst;
Analysieren (610) des ersten Satzes von Tiefenkomponenten um die Vollständigkeit der Tiefenkomponenten zu bestimmen;
Erhalten (604) eines zweiten Satzes von Bildern der Szene, wobei jeder Satz von Bildern von einer Gruppe von Kameras unter allen verfügbaren Kameras, die die Szene abbilden, erhalten wird, die fixiert sind; und
Erzeugen (606) eines zweiten Satzes von Tiefenkomponenten basierend auf dem zweiten Satz von Bildern, wobei:
falls die Analyse (610) bestimmt, dass der erste Satz von Tiefenkomponenten überkomplett ist, die Anzahl der Tiefenkomponenten in dem zweiten Satz so gewählt wird, dass sie kleiner ist als die Anzahl derTiefenkomponenten in dem ersten Satz, wobei der überkomplette erste Satz von Tiefenkomponenten mehr als genug Tiefeninformationen der Szene aufweist, um einen 6DoF-Frame zu rendern, und
falls die Analyse bestimmt, dass der erste Satz von Tiefenkomponenten unterkomplett ist, die Anzahl der Tiefenkomponenten in dem zweiten Satz so gewählt wird, dass sie größer ist als die Anzahl der Tiefenkomponenten in dem ersten Satz, wobei ein Abschnitt der Tiefeninformationen der Szene im unterkompletten ersten Satz von Tiefenkomponenten fehlt, um einen Frame der 6DoF-Szene zu rendern.

2. Verfahren nach Anspruch 1, wobei der erste Satz von Bildern mit einer ersten Gruppe von Kameras erhalten wird und wobei das Analysieren (610) des ersten Satzes von Tiefenkomponenten das Bestimmen einer Angabe darüber umfasst, wie nah ein oder mehrere der Objekte in der Szene an der ersten Gruppe von Kameras sind.

3. Verfahren nach einem der Ansprüche 1 oder 2, wobei eine Tiefenkomponente eine Tiefenkarte umfasst, die durch Durchführen einer Tiefenabschätzung für mindestens zwei Bilder erzeugt wird.

4. Verfahren nach einem der Ansprüche 1 bis 3, weiter umfassend das Bestimmen, ob eine der Kamera zugewandte Oberfläche eines der Objekte in der Szene im Sichtfeld (106) von mindestens zwei Kameras (102), die dem ersten Satz von Bildern entsprechen, nicht sichtbar ist, wobei das Erzeugen (606) eines zweiten Satzes von Tiefenkomponenten weiter auf dem Bestimmen basiert.

5. Verfahren nach einem der Ansprüche 1 bis 4, wobei das Analysieren (610) des ersten Satzes von Tiefenkomponenten weiter das Bestimmen umfasst, ob irgendein Objekt in der Szene mindestens teilweise in dem ersten Satz von Tiefenkomponenten verdeckt ist.

6. Verfahren nach einem der Ansprüche 1 bis 5, wobei das Analysieren (610) des ersten Satzes von Tiefenkomponenten weiter das Bestimmen umfasst, ob der erste Satz von Tiefenkomponenten visuelle Artefakte und/oder Tiefenartefakte aufweist.

7. Verfahren nach einem der Ansprüche 1 bis 6, wobei der erste Satz von Bildern mit einer ersten Gruppe von Kameras erhalten wird und wobei das Verfahren weiter das Auswählen (616) einer zweiten Gruppe von Kameras umfasst, die konfiguriert ist, um den zweiten Satz von Bildern basierend auf der Analyse (610) des ersten Satzes von Tiefenkomponenten zu erhalten.

8. Verfahren nach Anspruch 7, wobei das Auswählen (616) einer Gruppe von Kameras das Auswählen einer vordefinierten Gruppe von Kameras aus einem Satz von vordefinierten Gruppen von Kameras umfasst, wobei jede vordefinierte Gruppe von Kameras mit einem minimalen Abstand von der vordefinierten Gruppe von Kameras assoziiert ist, bei dem ein Objekt in der Szene garantiert innerhalb des Sichtfeldes (106) von mindestens zwei Kameras (102) in der vordefinierten Gruppe von Kameras ist.

9. Computerprogrammprodukt, das Computerprogrammcode umfasst, der, wenn er auf einem Computersystem ausgeführt wird, das ein Verarbeitungssystem aufweist, das Verarbeitungssystem veranlasst, alle Schritte des Verfahrens nach einem der Ansprüche 1 bis 8 durchzuführen.

10. System zum Erzeugen von Tiefendaten für ein Video mit sechs Freiheitsgraden, 6DoF, Video einer Szene, wobei das System einen Prozessor umfasst, der zu Folgendem konfiguriert ist:
Erhalten (604) eines ersten Satzes von Bildern der Szene;
Erzeugen (606) eines ersten Satzes von Tiefenkomponenten basierend auf dem ersten Satz von Bildern, wobei jede Tiefenkomponente eine Vielzahl von Tiefenwerten umfasst;
Analysieren (610) des ersten Satzes von Tiefenkomponenten um die Vollständigkeit der Tiefenkomponenten zu bestimmen;
Erhalten (604) eines zweiten Satzes von Bildern der Szene, wobei jeder Satz von Bildern von einer Gruppe von Kameras unter allen verfügbaren Kameras, die die Szene abbilden, erhalten wird, die fixiert sind; und
Erzeugen (606) eines zweiten Satzes von Tiefenkomponenten basierend auf dem zweiten Satz von Bildern, wobei:
falls die Analyse (610) bestimmt, dass der erste Satz von Tiefenkomponenten überkomplett ist, die Anzahl der Tiefenkomponenten in dem zweiten Satz so gewählt wird, dass sie kleiner ist als die Anzahl derTiefenkomponenten in dem ersten Satz, wobei der überkomplette erste Satz von Tiefenkomponenten mehr als genug Tiefeninformationen der Szene aufweist, um einen 6DoF-Frame zu rendern, und
falls die Analyse bestimmt, dass der erste Satz von Tiefenkomponenten unterkomplett ist, die Anzahl der Tiefenkomponenten in dem zweiten Satz so gewählt wird, dass sie größer ist als die Anzahl der Tiefenkomponenten in dem ersten Satz, wobei ein Abschnitt der Tiefeninformationen der Szene im unterkompletten ersten Satz von Tiefenkomponenten fehlt, um einen Frame der 6DoF-Szene zu rendern.

11. System nach Anspruch 10, wobei der erste Satz von Bildern mit einer ersten Gruppe von Kameras erhalten wird und wobei der Prozessor konfiguriert ist, um den ersten Satz von Tiefenkomponenten zu analysieren (610), indem eine Angabe darüber bestimmt wird, wie nah ein oder mehrere der Objekte in der Szene an der ersten Gruppe von Kameras sind.

12. System nach einem der Ansprüche 10 oder 11, wobei der Prozessor weiter konfiguriert ist, um zu bestimmen, ob eine der Kamera zugewandte Oberfläche irgendeines der Objekte in der Szene nicht im Sichtfeld (106) von mindestens zwei Kameras (102), die dem ersten Satz von Bildern entsprechen, sichtbar ist, und wobei der Prozessor weiter konfiguriert ist, um basierend auf der Bestimmung einen zweiten Satz von Tiefenkomponenten zu erzeugen (606).

13. System nach einem der Ansprüche 10 bis 12, wobei der erste Satz von Bildern mit einer ersten Gruppe von Kameras erhalten wird und wobei der Prozessor weiter konfiguriert ist, um eine Gruppe von Kameras auszuwählen (614), die konfiguriert ist, um den zweiten Satz von Bildern basierend auf der Analyse des ersten Satzes von Tiefenkomponenten zu erhalten.

14. System nach Anspruch 13, wobei der Prozessor konfiguriert ist, um eine Gruppe von Kameras auszuwählen (614), indem eine vordefinierte Gruppe von Kameras aus einem Satz von vordefinierten Gruppen von Kameras auswählt wird, wobei jede vordefinierte Gruppe von Kameras mit einem minimalen Abstand von der vordefinierten Gruppe von Kameras assoziiert ist, bei dem ein Objekt in der Szene garantiert innerhalb des Sichtfeldes (106) von mindestens zwei Kameras (102) in der vordefinierten Gruppe von Kameras ist.

## Revendications

1. Procédé mis en œuvre par ordinateur pour générer des données de profondeur pour une vidéo à six degrés de liberté, 6DoF, d'une scène, le procédé comprenant les étapes consistant à :
obtenir (604) un premier ensemble d'images de la scène ;
générer (606) un premier ensemble de composantes de profondeur sur la base du premier ensemble d'images, dans lequel chaque composante de profondeur comprend une pluralité de valeurs de profondeur ;
analyser (610) le premier ensemble de composantes de profondeur pour déterminer l'exhaustivité des composantes de profondeur ;
obtenir (604) un second ensemble d'images de la scène, dans lequel chaque ensemble d'images est obtenu à partir d'un groupe de caméras parmi toutes les caméras disponibles prenant des images de la scène, qui sont fixes ; et
générer (606) un second ensemble de composantes de profondeur sur la base du second ensemble d'images, dans lequel :
si l'analyse (610) détermine que le premier ensemble de composantes de profondeur est surcomplet, le nombre de composantes de profondeur dans le second ensemble est sélectionné pour être inférieur au nombre de composantes de profondeur dans le premier ensemble, dans lequel le premier ensemble surcomplet de composantes de profondeur présente plus que suffisamment d'informations de profondeur de la scène pour restituer une trame 6DoF, et
si l'analyse détermine que le premier ensemble de composantes de profondeur est incomplet, le nombre de composantes de profondeur dans le second ensemble est sélectionné pour être supérieur au nombre de composantes de profondeur dans le premier ensemble, dans lequel une partie des informations de profondeur de la scène est manquante dans le premier ensemble incomplet de composantes de profondeur pour restituer une trame de la scène 6DoF.

2. Procédé selon la revendication 1, dans lequel le premier ensemble d'images est obtenu à l'aide d'un premier groupe de caméras et dans lequel l'analyse (610) du premier ensemble de composantes de profondeur comprend la détermination d'une indication de la proximité d'un ou plusieurs des objets de la scène par rapport au premier groupe de caméras.

3. Procédé selon l'une quelconque des revendications 1 ou 2, dans lequel une composante de profondeur comprend une carte de profondeur générée en effectuant une estimation de profondeur sur au moins deux images.

4. Procédé selon l'une quelconque des revendications 1 à 3, comprenant en outre la détermination du fait qu'une surface faisant face à la caméra de l'un quelconque des objets de la scène est ou non visible dans le champ de vision (106) d'au moins deux caméras (102) correspondant au premier ensemble d'images, dans lequel la génération (606) d'un second ensemble de composantes de profondeur est en outre basée sur la détermination.

5. Procédé selon l'une quelconque des revendications 1 à 4, dans lequel l'analyse (610) du premier ensemble de composantes de profondeur comprend en outre la détermination du fait qu'un objet quelconque de la scène est au moins partiellement occulté ou non dans le premier ensemble de composantes de profondeur.

6. Procédé selon l'une quelconque des revendications 1 à 5, dans lequel l'analyse (610) du premier ensemble de composantes de profondeur comprend en outre la détermination du fait que le premier ensemble de composantes de profondeur présente ou non de quelconques artefacts visuels et/ou artefacts de profondeur.

7. Procédé selon l'une quelconque des revendications 1 à 6, dans lequel le premier ensemble d'images est obtenu avec un premier groupe de caméras et dans lequel le procédé comprend en outre la sélection (616) d'un second groupe de caméras configuré pour obtenir le second ensemble d'images sur la base de l'analyse (610) du premier ensemble de composantes de profondeur.

8. Procédé selon la revendication 7, dans lequel la sélection (616) d'un groupe de caméras comprend la sélection d'un groupe prédéfini de caméras parmi un ensemble de groupes prédéfinis de caméras, dans lequel chaque groupe prédéfini de caméras est associé à une distance minimale à partir du groupe prédéfini de caméras au niveau de laquelle un objet dans la scène se trouve de manière garantie dans le champ de vision (106) d'au moins deux caméras (102) dans le groupe prédéfini de caméras.

9. Produit de programme informatique comprenant un code de programme informatique qui, lorsqu'il est exécuté sur un système informatique présentant un système de traitement, amène le système de traitement à effectuer toutes les étapes du procédé selon l'une quelconque des revendications 1 à 8.

10. Système pour générer des données de profondeur pour une vidéo à six degrés de liberté, 6DoF, d'une scène, le système comprenant un processeur configuré pour :
obtenir (604) un premier ensemble d'images de la scène ;
générer (606) un premier ensemble de composantes de profondeur sur la base du premier ensemble d'images, dans lequel chaque composante de profondeur comprend une pluralité de valeurs de profondeur ;
analyser (610) le premier ensemble de composantes de profondeur pour déterminer l'exhaustivité des composantes de profondeur ;
obtenir (604) un second ensemble d'images de la scène, dans lequel chaque ensemble d'images est obtenu à partir d'un groupe de caméras parmi toutes les caméras disponibles prenant des images de la scène, qui sont fixes ; et
générer (606) un second ensemble de composantes de profondeur sur la base du second ensemble d'images, dans lequel :
si l'analyse (610) détermine que le premier ensemble de composantes de profondeur est surcomplet, le nombre de composantes de profondeur dans le second ensemble est sélectionné pour être inférieur au nombre de composantes de profondeur dans le premier ensemble, dans lequel le premier ensemble surcomplet de composantes de profondeur présente plus que suffisamment d'informations de profondeur de la scène pour restituer une trame 6DoF, et
si l'analyse détermine que le premier ensemble de composantes de profondeur est incomplet, le nombre de composantes de profondeur dans le second ensemble est sélectionné pour être supérieur au nombre de composantes de profondeur dans le premier ensemble, dans lequel une partie des informations de profondeur de la scène est manquante dans le premier ensemble incomplet de composantes de profondeur pour restituer une trame de la scène 6DoF.

11. Système selon la revendication 10, dans lequel le premier ensemble d'images est obtenu à l'aide d'un premier groupe de caméras et dans lequel le processeur est configuré pour analyser (610) le premier ensemble de composantes de profondeur en déterminant une indication de la proximité d'un ou plusieurs des objets de la scène par rapport au premier groupe de caméras.

12. Système selon l'une quelconque des revendications 10 ou 11, dans lequel le processeur est en outre configuré pour déterminer qu'une surface faisant face à la caméra de l'un quelconque des objets de la scène est ou non visible dans le champ de vision (106) d'au moins deux caméras (102) correspondant au premier ensemble d'images, et dans lequel le processeur est en outre configuré pour générer (606) un second ensemble de composantes de profondeur sur la base de la détermination.

13. Système selon l'une quelconque des revendications 10 à 12, dans lequel le premier ensemble d'images est obtenu à l'aide d'un premier groupe de caméras et dans lequel le processeur est en outre configuré pour sélectionner (614) un groupe de caméras configuré pour obtenir le second ensemble d'images sur la base de l'analyse du premier ensemble de composantes de profondeur.

14. Système selon la revendication 13, dans lequel le processeur est configuré pour sélectionner (614) un groupe de caméras en sélectionnant un groupe prédéfini de caméras parmi un ensemble de groupes prédéfinis de caméras, dans lequel chaque groupe prédéfini de caméras est associé à une distance minimale à partir du groupe prédéfini de caméras au niveau de laquelle un objet dans la scène se trouve de manière garantie dans le champ de vision (106) d'au moins deux caméras (102) dans le groupe prédéfini de caméras.
